## Europäisches Patentamt
## European Patent Office
## Office européen des brevets

(19)

(11) Veröffentlichungsnummer : **0 157 250**
**B1**

(12) ## EUROPÄISCHE PATENTSCHRIFT

(45) Veröffentlichungstag der Patentschrift :
**10.02.88**

(21) Anmeldenummer : **85102936.3**

(22) Anmeldetag : **14.03.85**

(51) Int. Cl.⁴ : **A 01 C   1/08**, A 01 C   1/00,
**B 05 B   3/00**

(54) **Vorrichtung zum Beizen von Saatgut.**

(30) Priorität : **15.03.84 CH 1300/84**
**31.03.84 DE 3412037**

(43) Veröffentlichungstag der Anmeldung :
**09.10.85 Patentblatt 85/41**

(45) Bekanntmachung des Hinweises auf die Patenterteilung : **10.02.88 Patentblatt 88/06**

(84) Benannte Vertragsstaaten :
**AT CH DE FR GB IT LI NL SE**

(56) Entgegenhaltungen : ·
**AT-B-   293 777**
**DE-A- 3 244 059**
**DE-C-   531 382**
**GB-A- 1 417 694**
**GB-A- 2 043 489**
**GB-A- 2 078 550**
**HU-B-   157 922**
**US-A- 4 320 715**
**US-A- 4 360 545**
**SOVIET INVENTIONS ILLUSTRATED, Woche E07, 31.**
**März 1982, Zusammenfassung Nr. B725, Derwent**
**Publication Ltd., Section General/Mechanical, Lon-**
**don, GB; & SU - A - 826 985 (TIMOSHENKO) 07.05.1981**

(73) Patentinhaber : **Gebrüder Bühler AG**
**CH-9240 Uzwil (CH)**

(72) Erfinder : **Mueller, Roman**
**Büelhofstrasse 22**
**CH-9244 Niederuzwil (CH)**

(74) Vertreter : **EGLI-EUROPEAN PATENT ATTORNEYS**
**Widenmayerstrasse 5**
**D-8000 München 22 (DE)**

## Beschreibung

Die Erfindung bezieht sich auf eine Vorrichtung zum Beizen von Saatgut mit einer Beizkammer, in der im freien Fall in Form eines Ringschleiers abfallendes Saatgut mit Beizmittel, das von einer Beizmittelsprayeinrichtung abgegeben wird, beaufschlagt wird, auf einen konzentrisch zu sowie unter dieser angeordneten Drehteller abrieselt, auf diesem umgelenkt und anschließend abgeworfen wird, und bei welcher der Drehteller schalenartig mit einem nach außen aufsteigenden Rand ausgebildet ist.

In der DE-C-531.382 ist eine Beizvorrichtung mit einer Beizkammer beschrieben, bei der ein Beizmittelstrahl von einer Schleuderscheibe aus radial erzeugt und flächig verspritzt wird. Am ganzen Umfang außerhalb der Schleuderscheibe fällt ein kontinuierlicher Saatgutschleier herab, wobei Saatgut und Beizmittelstrahl entlang einer Ringlinie aufeinandertreffen. Eine solche Anordnung hat sich als nicht immer voll befriedigend erwiesen, zumal sich auch ein Teil des Beizmittels an den Wänden der Vorrichtung absetzt und eine genügende Ummantelung der Saatkörner damit jedenfalls nicht erreichbar ist.

Beim Stand der Technik aus HU-A-157.922 sind demgegenüber die Funktionen teilweise umgekehrt. Der Produktstrom wird hier im freien Fall auf einen konusförmigen Körnerschleuderteller abgeworfen, der innerhalb einer Beizkammer angeordnet ist. Der frei fallende Körnerstrom wird dabei über seiner ganzen Weglänge von zwei gegenüberliegenden Spraydüsen beaufschlagt. Mit dem Körnerschleuderteller wird der Kornstrom umgelenkt und die Verweilzeit der einzelnen Körner im Beizraum vergrößert, wodurch die Vermischung der Körner mit dem Beizmittel verbessert wird. Dabei wird ein beachtlich großer Teil des Beizmittels an die der Beizmitteldüse gegenüberliegende Wandung der Vorrichtung angespritzt, was besonders im Falle der Anwendung von quecksilberfreiem Beizmittel nicht mehr wünschenswert ist, da diese Beizmittel zum Teil außerordentlich klebrig sind und an den Wänden der Vorrichtung Krusten ausbilden können. Darüberhinaus wird dabei immer noch nicht die gewünschte ausreichende Verteilung des Beizmittels auf dem Korn bewirkt, wobei selbst die Verteilungsintensität von Korn zu Korn stark abweicht.

Die GB-A-1 417 694 beschreibt eine Vorrichtung zum Beizen von Saatgut, bei der das Saatgut in einer Beizkammer schleierartig nach unten abfällt, dabei mit von einer Beizmittelsprayeinrichtung abgegebenem Beizmittel beaufschlagt wird und sodann auf einen konzentrisch zu sowie unter der Beizmittelsprayeinrichtung angeordneten Drehteller abrieselt, dort umgelenkt und anschließend abgeworfen wird. Hierbei ist der Drehteller schalenartig mit einem nach außen aufsteigenden Rand ausgebildet, so daß ein muldenförmiger Drehteller entsteht. Als Beizmittelsprayeinrichtung werden drei übereinander angeordnete, rotierende Schleuderscheiben eingesetzt, auf die das Beizmittel aufgegeben und durch die Rotation radial nach außen abgeschleudert wird. Das herabfallende Saatgut wird im freien Fall durch das nach außen abgeschleuderte Beizmittel hindurchgeführt, dabei benetzt, fällt auf den muldenförmigen Drehteller auf und wird anschließend von diesem ausgeschleudert. Der Antrieb der Schleuderscheiben erfolgt über einen üblichen Elektromotor.

Ausgehend hiervon liegt der Erfindung die Aufgabe zugrunde, eine bekannte Beizvorrichtung so weiterzuentwickeln, daß eine noch bessere und gleichmäßigere Beizmittelbenetzung des Saatgutes bei verringertem Beizmittelaufwand erzielt wird.

Erfindungsgemäß wird diese Aufgabe bei einer Vorrichtung der eingangs genannten Art dadurch gelöst, daß die Beizmittelsprayeinrichtung innerhalb des Drehtellers angeordnet und durch einen hochtourigen pneumatischen Motor mit einer Arbeitsdrehzahl von vorzugsweise 5 000 bis 20 000 U/min. antreibbar ist, und daß die Abluft des Motors zur Erzeugung einer Spraywirkung eingesetzt wird.

Die erfindungsgemäße Vorrichtung führt zu einer besonder intensiven Beizwirkung dadurch, daß das schleierartig abrieselnde Saatgut nicht nur während seines freien Falls durch den nach außen geschleuderten Beizmittel-Ringstrahl hindurchfällt und dabei benetzt wird, sondern anschließend auf dem muldenförmigen Drehteller radial nach außen beschleunigt wird, dabei laufend seine Lage ändert, wobei das auf der Oberfläche jedes Korns vorhandene Beizmittel noch gleichmäßiger über die Kornoberfläche verteilt wird, das Beizmittel beim Hinaufwandern längs des äußeren Randes des Drehtellers zwangsläufig ein zweites Mal durch den flächigen Beizmittelstrahl zusätzlich hindurchgeführt wird und dabei eine erneute Benetzung mit demselben Beizmittelstrahl erfolgt. Dem ersten Benetzungsvorgang im fallenden Ringschleier wird damit, um eine gewisse Zeit nachversetzt, ein zweiter Benetzungsvorgang nachgeschaltet und zwar zu einem Zeitpunkt, bei dem das beim ersten Benetzungsvorgang auf die jeweilige Kornoberfläche aufgebrachte Beizmittel infolge des Auftreffens des Kornes auf den Drehteller und die sich anschließenden Ausschleudereffekte sogar schon nachverteilt und vergleichmäßigt wurde. In dieser Situation erfolgt dann der zweite Benetzungsvorgang, bei dem somit die Ausgangsverhältnisse für eine weitere Aufnahme von Beizmittel auf der Kornoberfläche besonders günstig sind. Dadurch, daß gleichzeitig aber der Ausschleudervorgang auf dem Drehteller noch weiter stattfindet, wird auch das neuerlich zugeführte Beizmittel sofort und besonders gut auf der Oberfläche der Saatgutkörner verteilt, wodurch beim Verlassen des Schleudertellers die Saatgutkörner letztlich eine besonders gute und gleichmäßige Beizmittelverteilung auf ihrer Oberfläche aufweisen. Der bei der Erfindung erreichte Dreifacheffekt, nämlich ein erstes Benetzen des ringförmigen abrieselnden Körnerschleiers, ein anschließendes trommelartiges Einarbeiten, Mischen und Reiben des vorgebeizten Korns auf dem muldenförmigen Drehteller sowie das nachgeschaltete Intensivbeizen des Saatgutes auf dem Drehteller, führt zu überraschend guten Resultaten.

Durch die relativ große Geschwindigkeit, mit der sich das Korn um alle möglichen Achsen drehen und in verschiedenste Raumrichtungen bewegen kann, lassen sich starke Drallbewegungen des Korns erzielen mit der Folge, daß die aufgesprayten Beizmittel-Tropfen sich rasch flächig verteilen und selbst in Vertiefungen, sogar in Höhlungen, die nur über feine Öffnungen erreichbar sind, ähnlich einem « Kriechöl » eindringen und sich dabei ganz fein verteilen. Durch die starke Bewegung der Körner und die intensiven Schlag- und Reibkräfte von Korn zu Korn wie auch gegenüber dem muldenförmigen Drehteller tauschen die Körner das Zuviel und Zuwenig an Beizmittel untereinander aus, wobei an der Kornoberfläche ein Massiervorgang auftritt. Das zweimalige Hindurchführen des Saatgutes durch denselben Beizmittelstrahl intensiviert nicht nur den Benetzungseffekt, sondern ergibt auch eine zweimalige Ausnutzung desselben Strahls und damit eine bessere Ausnutzung der aufgewendeten Beizmittelmenge, was einer Verringerung des Beizmittelaufwandes im praktischen Fall entspricht. Hinzukommt, daß infolge der großen Drehzahl des eingesetzten hochtourigen pneumatischen Motors ein besonders starker Ausschleudereffekt des Beizmittels erreicht werden kann, der noch dazu durch die Verwendung der Abluft des Antriebsmotors im gleichgerichteten Sinne verstärkt wird. Die auszuspritzende Flüssigkeit wird nicht nur infolge hoher Zentrifugalkräfte nach außen befördert, sondern hierin auch noch durch die gleichgerichtete Abluftströmung verstärkt. Durch die erfindungsgemäßen Maßnahmen läßt sich eine außerordentlich wirkungsvolle Beizmitteldosierung bei überraschend geringem Beizmittelverbrauch sowie vorzüglicher Beizwirkung erreichen, wobei zudem auch noch der Antrieb des pneumatischen Motors mit vergleichsweise geringem Energieaufwand erfolgen kann.

Mit der erfindungsgemäßen Vorrichtung ist es möglich, die einzelnen Körner des Saatgutes sehr intensiv zu beizen, wobei gegenüber bekannten Apparaten deutlich weniger Beizmittel verbraucht wird, ohne daß die Keimfähigkeit des Saatgutes beeinträchtigt wird oder Kornschäden oder Kornbruch auftreten. Die Beizmittelsprayeinrichtung wird bevorzugt auf der Hälfte der Höhe, über die der Rand des schalenartigen Drehtellers sich nach oben erstreckt, in einer wenigstens annähernd horizontalen Ebene angeordnet.

Es ist weiterhin von Vorteil, wenn eine Vorrichtung vorgesehen ist, über welche die Drehzahl des Drehtellers eingestellt werden kann.

Die Beizmittel-Sprayeinrichtung weist bevorzugt eine von ihrem Rotor den Beizmittelstrahl abgebende Pumpe auf, die vorzugsweise als (insbesondere schleudertellerartig ausgebildete) Radialpumpe ausgeführt ist, wobei zweckmäßigerweise der Rotor dieser Radialpumpe einen schräg — nach außen ansteigenden Rand besitzt. Die Beizmittel-Sprayeinrichtung ist ferner bevorzugt mit einem Injektorkanal zur Zufuhr von Luft zu wenigstens einer Beizmitteldüse bzw. zum Zerstäuben eines oder mehrerer Beizmittels versehen, wobei vorteilhafterweise im Bereich des Zusammentreffens von Luft und Beizmittel eine Zerstäubungskammer ausgebildet ist. Vorzugsweise ist dabei die Abluft des pneumatischen Motors an die eine oder die anderen Beizmitteldüse(n) angeschlossen.

Die Erfindung wird nachfolgend anhand der Zeichnung im Prinzip beispielshalber noch näher erläutert. Es zeigen :

Fig. 1 eine Ausführungsform einer erfindungsgemäßen Vorrichtung im Längsschnitt ;

Fig. 2 einen Ausschnitt aus Fig. 1 (in vergrößerter Darstellung) ;

Fig. 3 einen Schaltkreis für die Vorrichtung nach Fig. 1, sowie

Fig. 4 und 4a eine Ausbildung der Beizmittel-Sprayeinrichtung für eine erfindungsgemäße Vorrichtung.

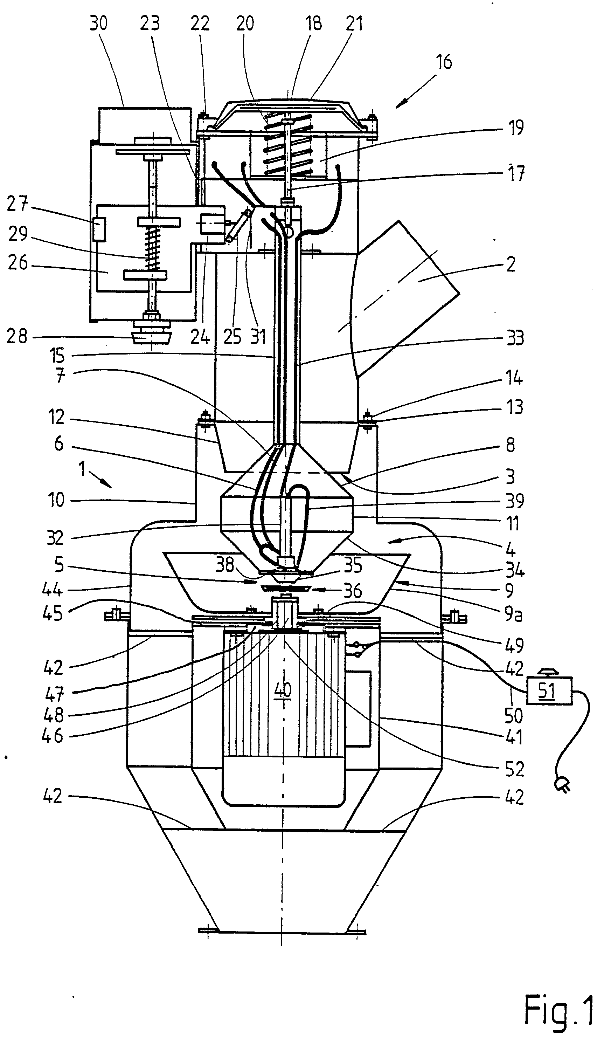

Die in Fig. 1 gezeigte Beizvorrichtung 1 für Saatgut besitzt in ihrem oberen Bereich eine Saatgutzuführung 2, die auch einen Dosierspalt 3 umfaßt, von dem aus das Saatgut in einen Behandlungsraum 4 gelangt. In diesem ist eine einen ringflächenförmigen Beizmittelstrahl erzeugende Beizmittel-Sprayeinrichtung 5 untergebracht, die an eine Beizmittel-Zuführeinrichtung in Form zweier Schläuche 6, 7 angeschlossen ist.

Das Saatgut wird dabei über die Zuführung 2 in die Beizvorrichtung 1 eingefüllt und verteilt sich im Bereich des Dosierspaltes 3 über einen Verteilerkegel 8. Wenn das Saatgut über den Verteilerkegel 8 schleierartig nach unten herabrieselt, ergeben sich am unteren Ende des Verteilerkegels Wurfparabeln für die Bewegungsbahn der einzelnen Saatgutkörner. Dies würde bedeuten, daß die einzelnen Körner innerhalb eines relativ großen Streubereiches auf dem Drehteller 9, der auf der Unterseite der Beizmittel-Sprayeinrichtung 5 angebracht ist, aufträfen. Um dies zu verhindern und einen relativ engen Auftreffbereich sicherzustellen, ist unterhalb des Verteilerkegels 8 und radial außerhalb desselben eine äußere, zylinderförmige Führungswand 10 vorgesehen, der zweckmäßig eine an den Verteilerkegel 8 sich anschließende radial innere Zylinderwand 11 zugeordnet ist, so daß das Saatgut innerhalb eines eng begrenzten Ringbereiches gezwungen wird zu fließen und demgemäß in Form eines Ringschleiers ·nach unten abfällt.

Der Dosierspalt 3 ist einerseits von der Oberfläche des Verteilerkegels 8 und andererseits von einer Trichterwand 12 begrenzt, die mittels eines äußeren Flansches 13 am Gehäuse des Beizapparates 1 festgeschraubt ist und gewünschtenfalls durch Lösen der Schrauben 14 und Abheben des oberen Teiles des Apparates 1 entfernt bzw. gegen einen Trichter anderer Neigung oder eine Zylinderwand ausgetauscht werden kann. Durch diese Austauschbarkeit ist die Möglichkeit für eine Grobeinstellung des Dosierspaltes 3 gegeben.

Die Dosierung erfolgt dabei durch Verstellung der Höhenlage des Verteilerkegels 8, wodurch sich besonders leicht eine Fernbedienung verwirklichen läßt und vodurch überhaupt eine erleichterte Verstellbarkeit insgesamt gegeben ist. Der Verteilerkegel 8 ist an seiner Oberseite mit einer Säule 15 verbunden, an deren oberem Ende eine Verstellvorrichtung 16 angreift.

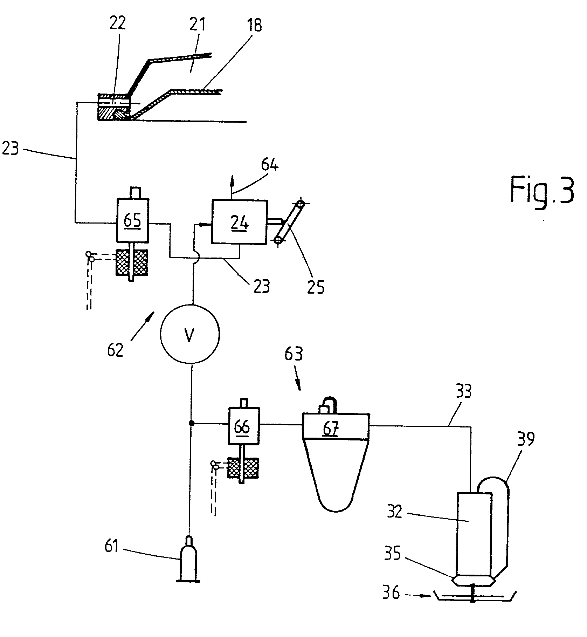

Diese Verstellvorrichtung 16 ist nach Art einer Nachlaufsteuerung ausgebildet und weist eine am oberen Ende der Säule 15 befestigte Verbindungsstange 17 auf, deren anderes Ende an einer Membrane 18 angeordnet ist. Zwischen der Membrane 18 und einem gerätefesten Wandungsabschnitt 19 erstreckt sich eine Druckfeder 20, die als Rückholfeder dient (anstelle einer Rückholfeder kann aber auch jede andere geeignete Rückstellkraft eingesetzt werden, etwa eine Gasfeder o. ä.). Auf der der Feder 20 gegenüberliegenden Seite der Membrane 18 ist ein Druckluftraum 21 vorgesehen, der über einen Einlaßkanal 22 mit einer (hier nicht dargestellten, aus dem Schaltschema gemäß Fig. 3 aber ersichtlichen) Druckluftquelle in Verbindung steht. In der Zuleitung 23 zum Einlaßkanal 22 befindet sich jedoch ein Absperrventil 24, das durch einen Hebel 25 betätigbar und auf einer Trägerplatte 26 montiert ist. Diese Trägerplatte 26 weist Gleitführungen 27 auf und ist mit Hilfe eines Einstellknopfes 28 und einer Schraubspindel 29 höhenverstellbar. Auf der Oberseite der Schraubspindel 29 ist ein Motorgehäuse 30 zur motorischen und fernsteuerbaren Drehung der Spindel 29 vorgesehen.

Der Betätigungshebel 25 liegt an einer Steuernocke 31 an, die mit der Säule 15 verbunden ist und als Positionsgeber für deren jeweilige Stellung dient. Wird mittels des Knopfes 28 oder über die Fernsteuereinrichtung 30 die Trägerplatte 26 abgesenkt, so gelangt das freie Ende des Betätigungshebels 25 zur Anlage an den zylindrischen Teil der Nocke 31, wobei der Hebel 25 das Ventil 24 öffnet. Hierdurch wird der Druckluftraum 21 stärker unter Druck gesetzt und die Membrane 18 so lange nach unten verschoben, bis das freie Ende des Hebels 25 wiederum zur Anlage an die Schrägfläche der Nocke 31 gelangt und das Ventil 24 absperrt. Das Ventil 24 ist dabei so ausgebildet, das es die Kanäle 22 und 23 und damit den Druckraum 21 mit der Außenluft verbindet, sobald das freie Ende des Hebels 25 über die Schrägfläche der Nocke 31 hinaus auf deren Oberseite gelangt. Dadurch wird Druck aus dem Druckraum 21 so lange abgelassen, bis die Nocke 31 unter Einwirkung der Rückholfeder 20 wieder in die aus Fig. 1 ersichtliche Relativstellung zum Hebel 25 gelangt ist.

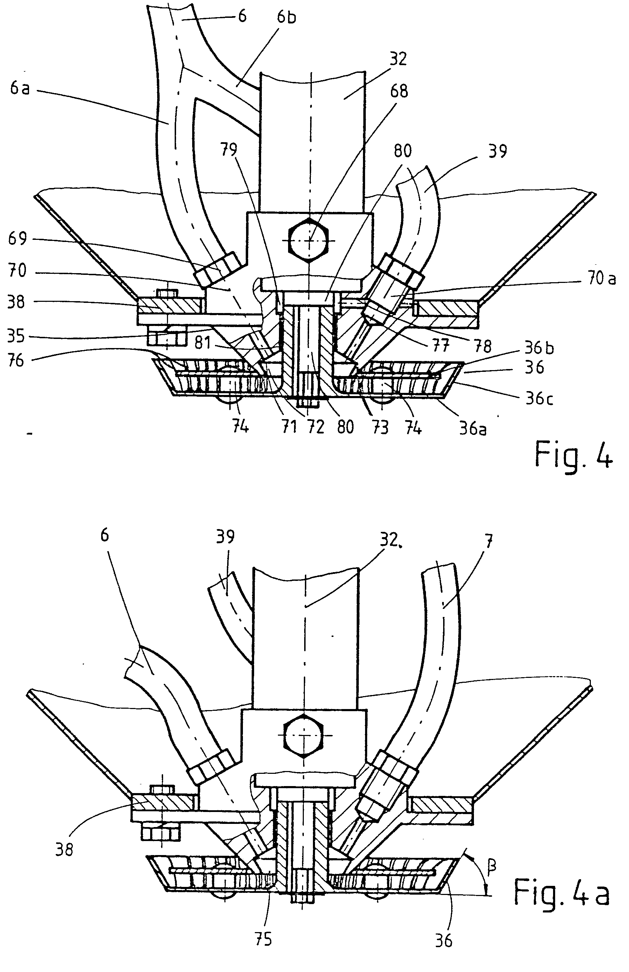

Möglichkeiten für die Ausbildung der Beizmittel-Sprayeinrichtung 5 sind in den Fig. 4 und 4a dargestellt und werden weiter unten noch näher erläutert. An dieser Stelle soll nur erwähnt sein, daß die Schläuche 6 und 7 (Fig. 1 und 4a) für die Zufuhr (gegebenenfalls unterschiedlicher) Beizmittel in festem, flüssigem oder dampfförmigem Zustand dienen und an der Oberseite der Beizvorrichtung 1 einmünden, wo (in den Fig. nicht dargestellte) Anschlüsse an einen entsprechenden Beizmittelvorrat vorgesehen sind. Außerdem verläuft innerhalb des Verteilerkegels 8 und innerhalb der an ihn angeschlossenen Säule 15 auch ein Druckluftschlauch 33, durch den die Antriebsdruckluft einem pneumatischen Motor 32 zugeführt wird. Die Mantelwand der Säule 15 weist an ihrer Oberseite entsprechende, z. B. langlochförmige Öffnungen auf, durch welche die Schläuche 6, 7 und 33 hindurchgeführt sind. Es sei darauf hingewiesen, daß durch diese Anordnung die gesamte Beizmittelzuführung durch die Säule 15, den Verteilerkegel 8 und die sich hieran anschließende Zylinderwand 11 sowie einen nach unten führenden Abdeckkegel 34 gegen Staubeinwirkung beim Einfüllen von Saatgut geschützt ist. Wie ersichtlich verläuft dabei der Abdeckkegel 34 etwa unter demselben Winkel wie der nach oben angestellte Randbereich 9a des Drehtellers 9.

Das untere Ende der Schläuche 6 und 7 ist an einen Düsenkopf 35 angeschlossen (Fig. 4 und 4a), der die Motorwelle des pneumatischen Motors 32 zentrisch umgibt, wobei am unteren Ende der Motorwelle ein Schleuderteller 36 in Form eines Drehtellers befestigt ist. In der dargestellten Anordnung sind der Motor 32 und der Düsenkopf 35 innerhalb der Kegeleinheit 8, 11 und 34 befestigt. Man könnte, falls gewünscht, jedoch die Teile 32 und 35 auch gerätefest an der Oberseite der Vorrichtung 1, z. B. über eine durch die Säule 15 hindurchgeführte Stange, befestigen. Innerhalb der Kegeleinheit 8, 11, 34 ist neben dem Schlauch 33 für die Luftzufuhr zum pneumatischen Motor 32 noch ein weiterer Schlauch 39 vorgesehen, der vom hinteren Ende des Motors 32 zum Düsenkopf 35 führt. Durch diesen Schlauch 39 wird die Abluft aus dem Motor 32 dem Düsenkopf 35 zugeführt, um dort eine bessewe Zerstäubung des über die Schläuche 6 und 7 zugeführten Beizmittels durch Aufbau einer Injektorwirkung zu erzielen. Dadurch lassen sich — insbesondere flüssige Beizmittel — zu sehr feinen Tröpfchen zerstäuben, wodurch sich eine sehr gute Verteilung des Beizmittels ergibt.

Innerhalb des Behandlungsraumes 4 ist ein Motor 40 in einem Abdeckgehäuse 41 angeordnet, das an seiner Unterseite offen ist, um den Zutritt von Kühlluft zu ermöglichen. Das Abdeckgehäuse 41 wird innerhalb des Behandlungsgehäuses 44 mit Hilfe radial verlaufender Stege 42 gehalten. Auf der Oberseite des Abdeckgehäuses 41 ist eine Montageplatte 45 vorgesehen, an welcher der Motor 40 befestigt ist. Dabei ragt die Welle 46 des Motors 40 durch eine Öffnung 47 in der Montageplatte 45 hindurch und ist mit einer Abdeckkappe 48 versehen, die ihrerseits durch ein zentrisches Loch des Drehtellers 9 von annähernd gleicher Größe wie sie hindurchragt und mit dem Drehteller 9 über einen Flansch 49 lösbar verbunden ist. Durch diese Verbindung ist es z. B. möglich, zur Änderung der geometrischen Verhältnisse je nach Saatgut den Drehteller 9 zu entfernen und durch einen anderen Drehteller mit geänderter Form bzw. Neigung seines Randes, gegebenenfalls auch verschiedener Höhe o. ä. zu ersetzen. Eine weitere Möglichkeit zur Anpassung an unterschiedliche Arten von Saatgut besteht auch darin, daß der Motor 40 über ein z. B. unterhalb eines Steges 42 verdeckt geführtes Kabel 50 mit einer (nicht dargestellen) Drehzahl-Einstelleinrichtung verbunden ist, so daß das Verhältnis der drehzahlabhängigen Größe der Zentrifugalkraft zu der durch die Randneigung des Drehtellers 9 bestimmten Größe der Zentripedalkraft veränderbar ist.

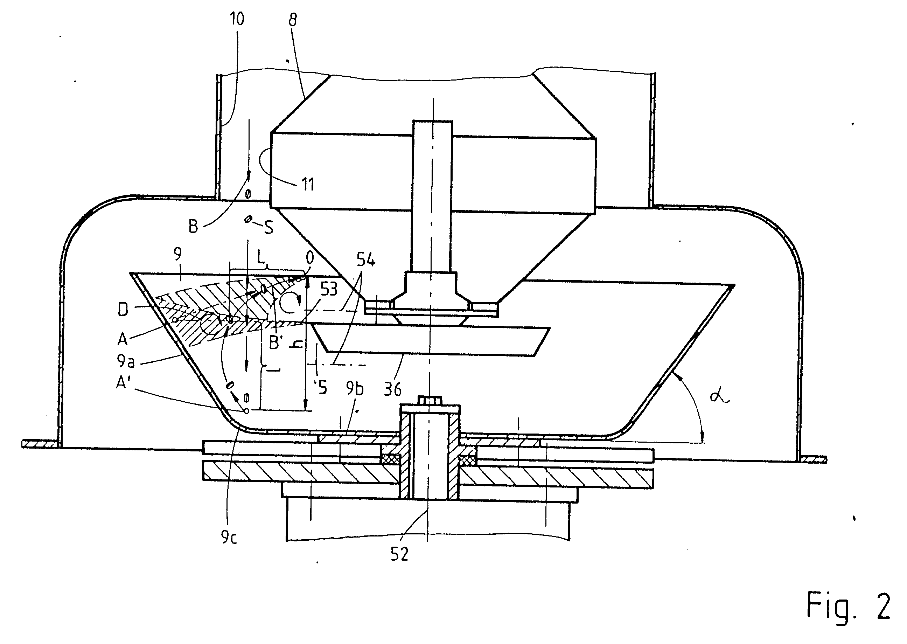

Die Wirkungsweise und die Besonderheit der geometrischen Anordnung sowie das Spiel der Kräfte ergibt sich anhand von Fig. 2 wie folgt :

Der um eine Achse 52 drehbare Drehteller 9 weist einen flachen Mittelbereich 9b auf, an dem sich über eine Krümmung 9c ein schräg nach oben geneigter Randbereich 9a anschließt. Die Neigung des Randbereiches 9a zur Horizontalen entspricht einem Winkel $\alpha$, der zweckmäßigerweise kleiner als 75° gewählt wird, bevorzugt im Bereich zwischen 30° und 75° liegt und insbesondere zwischen 55° und 65° gewählt werden sollte. Im dargestellten bevorzugten Ausführungsbeispiel beträgt dieser Winkel 60°.

Die Größe der durch die Drehung des Drehtellers 9 auf das Saatgut S ausgeübten Zentrifugalkraft hängt wesentlich davon ab, wo das Saatgut S auf dem Drehteller 9 auftrifft. Daher bilden die Zylinderwände 10 und 11 (vgl. auch Fig. 1) eine Begrenzung der durch eine unterbrochene Pfeillinie B in Fig. 2 angedeuteten Bahn des Saatgutes aus.

Der Schleuderteller 36 versprüht das flüssige Beizmittel entlang einer zunächst horizontalen, strichpunktiert angedeuteten Fläche 53 (mit einem Auftreffpunkt A auf den Drehtellerrand), wobei der tatsächliche Verlauf aufgrund der unvermeidlichen Strahlaufweitung und der Erdanziehung allerdings etwa innerhalb des schraffiert dargestellten Bereiches liegt. Auch wenn daher das Saatgut S relativ nahe der Achse 52 auf den flachen Boden 9b des Drehtellers 9 fallen würde (vgl. Fig. 2), würde es beim Herabfallen längs Linie 53 den Beizmittelstrahl ein erstes Mal durchqueren, dann auf den Drehteller 9 auftreffen und anschließend aufgrund der Beschleunigung, die es dort erfährt, radial nach außen (in Fig. 2 : nach links) bewegt werden, wobei es dann noch einmal in den schraffierten Bereich des Beizstrahles 53 eintritt und durch den Beizstrahl 53 dort erneut hindurchgeführt wird. Hierdurch wird eine ganz besonders gute Ausnützung des Beizmittelstrahles 53 wegen des zweimaligen Hindurchgangs des Saatgutes S durch ihn erzielt.

Bei dem in den Fig. gezeigten Ausführungsbeispiel wird jedoch zusätzlich auch noch ein Effekt ausgenützt, der im Tennisspiel als « slice » bekannt ist : die Bahn B des Saatgutes S wird nämlich zweckmäßig so ausgerichtet, daß das Saatgut S etwa im Krümmungsbereich 9c, mithin zu Beginn des schrägen Randbereiches 9a bei A' auftrifft. Dieser Auftreffpunkt A' liegt relativ weit von der Achse 52 entfernt, weshalb die dort wirkende Zentrifugalkraft relativ groß ist. Dieser Zentrifugalkraft steht jedoch eine Zentripedalkraft durch die Schräge des Randes 9a entgegen. Das Ergebnis des auftretenden Kräftespiels in Verbindung mit der Rotation des Drehtellers 9 bewirkt daher eine Umlenkung der Bahn B nicht nur in axialer Richtung, sondern auch in Umfangsrichtung des Drehtellers 9, woraus sich insgesamt eine spiralförmige Wendellinie ergibt (vgl. gekrümmter Teil B' der Bahn B in Fig. 2). In diesem Bahnabschnitt B' muß jedes einzelne Korn an seiner Unterlage aufgrund des radial wirkenden Druckes abrollen, so daß es eine Spindrehung im Sinne der Pfeile D erhählt. Da gleichzeitig auch der Beizmittelstrahl 53, wie Fig. 2 entnehmbar ist, etwa in die gleiche Richtung abgelenkt wird, wird das Saatgut und das Beizmittel längs des Bahnabschnittes B' gemeinsam geführt. In diesem Bahnabschnitt B' wälzen sich nun die einzelnen Körner aufgrund ihrer Spindrehung D um ihre eigene Achse im flüssigen Beizmittel und werden dabei erneut von allen Seiten gleichmäßig mit Beizmittel benetzt. Hierdurch wird eine besonders intensive Beizwirkung erzielt im Vergleich zu dem Fall einer nur einseitigen, an einer einzigen Seite des Saatgutes S erfolgenden Beizbehandlung, bei der es dazu kommen kann, daß das Saatkorn auf der unbehandelten Seite dem Fraß durch Schädlinge ausgesetzt ist. Die geometrischen Verhältnisse sind dabei zweckmäßig so ausgelegt, daß die Strahllinie 53 bis zum Auftreffpunkt A die Bahn B des Saatgutes S innerhalb des Drehtellers 9 etwa halbiert. Das Saatgut S läuft nämlich nach Durchquerung des annähernd in der Hälfte der Höhe h (über die sich der Randbereich nach oben erstreckt) gelegenen Beizmittelstrahles 53 über die Länge 1 bis zum Auftreffpunkt A', wird sodann umgelenkt und läuft annähernd die gleiche Strecke 1 zurück bis zum Schnittpunkt mit der Strahllinie 53, worauf sich der Bahnabschnitt B' über eine gesamte Radiallänge L (vgl. Darstellung in Fig. 2) ergibt. Auf diese Weise wird also die Saatgutbahn B innerhalb des Drehtellers 9 beim erneuten Durchlauf durch die Strahllinie 53 annähernd halbiert, wobei allerdings eine gewisse Toleranz dadurch gegeben ist, daß der Schleuderteller 36 sich innerhalb gewisser Grenzlinien 54, die in Fig. 2 gestrichelt eingezeichnet sind, bewegen kann. Im Punkt O verläßt dann das Saatgut S samt sonst noch vorhandenem Beizmittel den Drehteller 9 und wird abgeschleudert. Die genaue Lage des Punktes O ist, wie bereits erwähnt, von der Drehzahl des Drehtellers 9 und vom Winkel $\alpha$ sowie auch von der Masse der einzelnen Saatgutkörner abhängig.

Eine Steuerung für die Vorrichtung, etwa gemäß Fig. 1, wird nun anhand von Fig. 3 erläutert. Von einer Druckluftquelle 61 gehen zwei zueinander parallele Steuerkreise 62 und 63 aus. Während der Steuerkreis 62 die weiter oben erwähnte Höhenverstellung des Verteilerkegels 8 ansteuert, ist im Steuerkreis 63 der pneumatische Motor 32 angeordnet. Dabei führt die Leitung von der Druckluftquelle 61 im Steuerkreis 62 über einen Druckfeinregler V, durch den ein vorbestimmter Konstantdruck im Steuerkreis 62 aufrechterhalten wird. Der Ausgang des Feinreglers V ist mit dem Eingang des bereits besprochenen Ventiles 24 verbunden, das andererseits auch an die Leitung 23 angeschlossen ist. Ferner ist am Ventil 24 auch noch eine Entlüftungsleitung 64 vorgesehen. Die Leitung 23 wird, je nach der Stellung des Betätigungshebels 25, entweder mit der Druckluftquelle 61 (über den Feinregler V) oder, zum Ablassen des Druckes aus dem Druckraum 21, mit der Entlüftungsleitung 64 verbunden. Darüberhinaus kann die Leitung 23 über ein Magnetventil 65 auch willkürlich unterbrochen werden.

Ein ähnliches Unterbrecherventil 66 ist im Steuerkreis 63 vorgesehen, in dem der pneumatische Motor 32 über die Leitung 33 gespeist wird. Dabei kann zur Zufuhr von Schmierstoff zum Motor 32 eine entsprechende Einrichtung 67 zwischengeschaltet werden. Die Abluft des Motors 32 wird über die Leitung 39 zweckmäßigerweise an den Düsenkopf 35 zurückgeführt, um eine Injektorwirkung auf das zugeführte Beizmittel auszuüben. Die Einzelheiten des Düsenkopfes 35 sowie des darunter befindlichen Schleudertellers 36 sind aus den Fig. 4 und 4a ersichtlich :

Der Düsenkopf 35 samt dem an ihm über eine Schraube 68 befestigten pneumatischen Motor 32 wird von einer Montageplatte 38 (vgl. Fig. 1, 4 und 4a) gehalten und durch (in den Fig. nicht dargestellte) Einrichtungen befestigt. Im Düsenkopf 35 münden z. B., einander hinsichtlich der Mittelachse 52 gegenüberliegend, eine Abzweigung (Ast 6a) des Beizmittel-Zuführschlauches 6 und der Schlauch 39 zur Zufuhr der Abluft des Motors 32 ein. Ein weiterer Ast 6b des Schlauches 6 mündet etwa um 45° zum ersten Ast 6a versetzt in den Düsenkopf 35 ein (Fig. 4) ; dort kann aber auch, wie in Fig. 4 dargestellt, die Einmündung eines zweiten Schlauches 7 für z. B. ein anderes Beizmittel vorgesehen sein. Der Schlauch 7 könnte aber auch um 90° zum Ast 6a des Schlauches 6 versetzt in den Düsenkopf 35 einmünden. In jedem Fall ist die konstruktive Ausbildung der Einmündungen des Astes 6b bzw. des aus Fig. 4a ersichtlichen Schlauches 7 ebenso ausgebildet wie dies anhand des Astes 6a in Fig. 4 gezeigt ist. Dabei sind diese Schläuche mittels Holländermuttern 69 an in den Düsenkopf 35 jeweils eingeschraubte Gewindestutzen 70 angeschlossen, über die das Beizmittel aus dem betreffenden Schlauch 6 bzw. 7 in einen Düsenkanal mit einer Mündungsöffnung 71 an seinem unteren Ende geführt wird. Die Mündungsöffnung 71 liegt an einer Ringkammer 72 an, die radial nach außen durch einen ringförmigen Vorsprung 73 abgeschlossen wird. Über die Ringkammer 72 wird das Beizmittel auf die Oberfläche des flachen Mittelabschnittes 36a des Schleudertellers 36 gespritzt. Zur Vermeidung eines Rückschlages (durch den sich unbeabsichtigt Tröpfchen an der Außenseite des Düsenkopfes 35 und an der Unterseite der Montageplatte 38 absetzen könnten) ist über dem Mittelabschnitt 36a eine mittels Bolzen 74 im Abstand gehaltene, mitrotierende Abdeckplatte 36b vorgesehen, die eine mittige Öffnung 75 aufweist, durch die der ringförmige Vorsprung 73 des Düsenkopfes 35 hindurchragt. Durch die Schleuderwirkung des mit hoher Drehzahl rotierenden Schleudertellers 36 wird das zwischen den beiden Tellerplatten 36a und 36b befindliche Beizmittel radial nach außen geführt und über gekrümmte Leitschaufeln 76 am Rand 36c des Schleudertellers 36 abgeschleudert. Zur besonders leichten Abtrennung der einzelnen Beizmitteltropfen wird der Rand 36c, der die Schaufeln 76 trägt, radial nach außen so angestellt, daß der Winkel β zwischen einer äußeren Mantellinie des Randes 36c und der Ebene, die durch den flachen Mittelabschnitt 36a festgelegt ist, ein spitzer Winkel ist, der zweckmäßig zwischen 30° und 60°, etwa bei 45° liegt.

Das Beizmittel kann über den Schlauch 6 auch schon in vernebelter Form zugeführt werden. Zum Erzeugen einer großen Drehzahl von mehreren tausend Umdrehungen pro Minute, z. B. im Bereich von 5 000 bis 20 000 U/min., wird ein hochtouriger pneumatischer Motor 32 eingesetzt ist, dessen Abluft zum Erzielen einer Injektorwirkung auf das durch die Schläuche 6 und 7 zugeführte Beizmittel herangezogen wird. Zu diesem Zweck ist der Abluftschlauch 39 mit einer Bohrung 77 im Düsenkopf 35 über einen Gewindestutzen 70a verbunden (vgl. Fig. 4), der im wesentlichen gleich ausgebildet ist wie der Stutzen 70. Die Bohrung 77 ist jedoch mit einem Querkanal 78 verbunden, der vom Außenumfang des Düsenkopfes 35 her gebohrt ist, gegen den Außenumfang hin jedoch durch den Gewindestutzen 70a abgedeckt wird, wobei die Bohrung 77 den Kanal 78 unter einem Winkel kreuzt.

Der Kanal 78 mündet an seinem inneren Ende in eine Ringkammer 79, die im Bereich der Einmündung des Kanales 78 die Welle 80 des pneumatischen Motors 32 umgibt. An der der Einmündung des Kanales 78 diametral gegenüberliegenden Seite steht die Ringkammer 79 mit einem parallel zur Welle 80 verlaufenden Axialkanal 81 in Verbindung, der vor der Mündung 71 des Beizmittel-Zufuhrkanales in die Ringkammer 72 einmündet und auf diese Weise eine Injektorwirkung der aus ihm ausströmenden Luft auf das durch die Mündung 71 ankommende Beizmittel auslöst.

Die Abdeckplatte 36b (Fig. 4) hat aber auch noch eine zusätzliche Funktion, indem sie zusammen mit dem Mittelabschnitt 36a einen von der Kammer 72 wegführenden Radialkanal zu den Leitschaufeln 76 hin ausbildet. Dadurch wirkt sich der durch die große Drehzahl der Leitschaufeln 76 ausgeübte Sog über diesen Kanal bis in die Kammer 72 bzw. bis auf die Mündungsöffnung 71 aus, was bedeutet, daß in der Konstruktion gemäß Fig. 4 oder 4a der Schleuderteller 36 praktisch als Rotor einer Radialpumpe ausgebildet ist. Dieses Prinzip ist an sich unabhängig davon, wie gut der dadurch erzeugte Beizmittelstrahl durch mehrfaches bzw. einfaches Hindurchführen des Saatgutes ausgenützt wird. Hingegen versteht es sich, daß gewünschtenfalls der Beizmittelstrahl auch über den Rotor einer Axialpumpe abgegeben werden könnte. Durch die Ausbildung des Schleudertellers 36 als Radialpumpen-Motor ergibt sich aber eine glückliche Kombination eines ringflächigen Radialstrahles mit der beschriebenen Saugwirkung. Dabei könnte der zu den Leitschaufeln 76 führende Kanal anstelle einer mitdrehenden Platte 36b auch von einer ortsfesten Platte gebildet werden, die gleich wie die Platte 36b ausgebildet sein kann, jedoch nicht am Mittelabschnitt 36a, sondern an der Montageplatte 38 befestigt ist.

Als ganz besonders vorteilhaft hat es sich erwiesen, wenn der Drehteller 9 keinerlei Durchbrechungen aufweist, also z. B. auch nicht am Siebblech. Alle Saatgutteile wie auch alles Beizmittel muß den Drehteller 9 durch Zentrifugalkraft über den Tellerrand hinaus verlassen.

## Patentansprüche

1. Vorrichtung zum Beizen von Saatgut mit einer Beizkammer, in der im freien Fall in Form eines Ringschleiers abfallendes Saatgut mit Beizmittel, das von einer Beizmittelsprayeinrichtung (5) abgegeben wird, beaufschlagt wird, auf einen konzentrisch zu sowie unter dieser angeordneten Drehteller (9) abrieselt, auf diesem umgelenkt und anschließend abgeworfen wird, und bei welcher der Drehteller (9) schalenartig mit einem nach außen aufsteigenden Rand (9a) ausgebildet ist, dadurch gekennzeichnet, daß die Beizmittelsprayeinrichtung (5) innerhalb des Drehtellers (9) angeordnet, sowie durch einen hochtourigen pneumatischen Motor (32) mit einer Arbeitsdrehzahl von vorzugsweise 5 000 bis 20 000 U/min. antreibbar und die Abluft des pneumatischen Motors (32) zur Erzeugung einer Spraywirkung eingesetzt ist.

2. Vorrichtung nach Anspruch 1, dadurch gekennzeichnet, daß die Beizmittelsprayeinrichtung (5) auf der Hälfte der Höhe, über die der Rand (9a) des Drehtellers (9) sich nach oben erstreckt, in einer im wesentlichen annähernd horizontalen Ausrichtung angeordnet ist.

3. Vorrichtung nach Anspruch 1 oder 2, dadurch gekennzeichnet, daß die Beizmittelsprayeinrichtung (5) als Pumpe mit einem Rotor in form eines Schleudertellers (36), der einen schräg nach außen aufsteigenden Rand (36c) aufweist, ausgebildet ist.

4. Vorrichtung nach einem der Ansprüche 1 bis 3, dadurch gekennzeichnet, daß die Beizmittelsprayeinrichtung (5) einen Injektorkanal (77, 78, 79) zur Zufuhr von Luft zu einer oder mehreren Beizmitteldüse(n) (71) bzw. zum Zerstäuben eines oder mehrerer Beizmittel aufweist und vorzugsweise im Bereich des Zusammentreffens von Luft und Beizmittel eine Zerstäubungskammer (72) vorgesehen ist.

5. Vorrichtung nach Anspruch 4, dadurch gekennzeichnet, daß die Abluft des pneumatischen Motors (32) an die eine oder mehreren Beizmitteldüse(n) (71) angeschlossen ist.

6. Vorrichtung nach einem der Ansprüche 1 bis 5, dadurch gekennzeichnet, daß eine Einstellvorrichtung (51) für die Drehzahl des Drehtellers (9) vorgesehen ist.

## Claims

1. Apparatus for the dressing of seeds with a dressing chamber, in which seeds falling freely in the form of an annular veil are exposed to dressing agent which is issued from a dressing agent spray device (5), pour onto a rotary plate (9) arranged concentrically with respect to and underneath the latter, are deflected on said rotary plate and subsequently thrown off, and in which arrangement the rotary plate (9) is designed like a dish with an outwardly rising rim (9a), characterized in that the dressing agent spray device (5) is arranged inside the rotary plate (9), and can be driven by a high-speed pneumatic motor (32) with an operating speed of preferably 5,000 to 20,000 rpm and the exhaust air of the pneumatic motor (32) is used for the generation of a spray effect.

2. Apparatus according to Claim 1, characterized in that the dressing agent spray device (5) is arranged in a substantially approximately horizontal alignment over half the height over which the rim (9a) of the rotary plate (9) extends upwards.

3. Apparatus according to Claim 1 or 2, characterized in that the dressing agent spray device (5) is designed as a pump with a rotor in the form of a centrifugal plate (36), which has an obliquely outwardly rising rim (36c).

4. Apparatus according to one of Claims 1 to 3, characterized in that the dressing agent spray device (5) has an injector passage (77, 78, 79) for the supply of air to one or more dressing agent nozzle(s) (71) or for the atomization of one or more dressing agents and an atomization chamber (72) is preferably provided in the region where air and dressing agent meet.

5. Apparatus according to Claim 4, characterized in that the exhaust air of the pneumatic motor (32) is connected to the one or more dressing agent nozzle(s) (71).

6. Apparatus according to one of Claims 1 to 5, characterized in that a setting device (51) for the speed of the rotary plate (9) is provided.

## Revendications

1. Appareil de désinfection de semences comportant une chambre de désinfection dans. laquelle les semences, tombant en chute libre sous la forme d'un voile annulaire, reçoivent du désinfectant qui est émis par un dispositif de pulvérisation (5), arrivent sur un plateau tournant (9) placé concentriquement et sous ledit dispositif, sont renvoyées par ce plateau et ensuite éjectées, et dans lequel le plateau tournant (9) est une cuvette ayant un bord (9a) relevé vers l'extérieur, caractérisé en ce que le dispositif de pulvérisation de désinfectant (5) est placé à l'intérieur du plateau tournant (9) et peut être mis en rotation par un moteur pneumatique (32) à grande vitesse, à une vitesse de travail de préférence de 5 000 à 20 000 tr/mn, et que l'air sortant du moteur pneumatique (32) est utilisé pour la production d'un effet de pulvérisation.

2. Appareil selon la revendication 1, caractérisé en ce que le dispositif de pulvérisation de désinfectant (5) est placé, orienté dans l'ensemble à peu près horizontalement, à la moitié de la hauteur sur laquelle le bord (9a) du plateau tournant (9) s'étend vers le haut.

3. Appareil selon l'une des revendications 1 et 2, caractérisé en ce que le dispositif de pulvérisation de désinfectant (5) est une pompe ayant un rotor formé par un plateau centrifuge (36) qui a un bord (36c) dirigé obliquement vers l'extérieur.

4. Appareil selon l'une des revendications 1 à 3, caractérisé en ce que le dispositif de pulvérisation de désinfectant (5) présente un conduit injecteur (77, 78, 79) pour l'amenée d'air à une ou plusieurs buses à désinfectant (71) ou pour la pulvérisation d'un ou de plusieurs désinfectants, et une chambre de pulvérisation (72) est prévue de préférence dans la zone de rencontre de l'air et du désinfectant.

5. Appareil selon la revendication 4, caractérisé en ce que l'air sortant du moteur pneumatique (32) est conduit à la ou aux plusieurs buses à désinfectant (71).

6. Appareil selon l'une des revendications 1 à 5, caractérisé en ce qu'il est prévu un dispositif de réglage (51) pour le réglage de la vitesse de rotation du plateau tournant (9).

0 157 250

Fig.1

Fig. 2

Fig.3

Fig. 4

Fig. 4a

4